# EUROPÄISCHE PATENTANMELDUNG

(11) **EP 1 291 589 A2**
(43) Veröffentlichungstag der Anmeldung: **12.03.2003**
(21) Anmeldenummer: 02015039.7
(22) Anmeldetag: 05.07.2002
(51) Int. Cl.: F24F 12/00

(54) **Lüftungs-Heizvorrichtung für Innenräume eines Gebäudes**

(30) Priorität: 07.09.2001 DE 10144175
(71) Anmelder: Olsberg Hermann Everken GmbH, 59939 Olsberg (DE)
(72) Erfinder: Schmidt, Reinhard, 59939 Olsberg (DE); Joch, Franz-Josef, 59939 Olsberg (DE)
(74) Vertreter: Basfeld, Rainer, Dr. Dipl.-Phys.

(57) **Zusammenfassung**

Lüftungs-Heizvorrichtung für Innenräume eines Gebäudes, umfassend einen Heizkörper (2) für die Erwärmung der Raumluft, eine Lüftungseinheit mit mindestens einem Zuluftgebläse (12) für die Zufuhr von Frischluft zu dem Innenraum und mit mindestens einem Abluftgebläse (13) für die Abführung von Raumluft aus dem Innenraum sowie mit mindestens einem Wärmetauscher (11), wobei von dem Zuluftgebläse (12) angesaugte Frischluft und von dem Abluftgebläse (13) angesaugte Raumluft durch den mindestens einen Wärmetauscher (11) geleitet werden kann, und wobei die Lüftungs-Heizvorrichtung weiterhin ein Gehäuse umfasst, von dem der Heizkörper (2) und die Lüftungseinheit (3) zumindest teilweise aufgenommen sind, und wobei die Lüftungseinheit (3) und das Gehäuse (1) Verbindungsmittel aufweisen, die derart zusammenwirken, dass die Lüftungseinheit (3) als separates Modul aus dem Gehäuse (1) entnehmbar ist. Die Erfindung betrifft weiterhin an der Rückseite des Gehäuses (1) angeordnete Haltemittel für Heizungsrohre sowie eine Wandanschlussleiste (34) für die Anbringung des Gehäuses (1) an einer Wand. Weiterhin betrifft die Erfindung eine Einbauschablone (57) für die Justierung der Wandanschlussleiste (34).

## Beschreibung

Die vorliegende Erfindung betrifft eine Lüftungs-Heizvorrichtung für Innenräume eines Gebäudes, umfassend einen Heizkörper für die Erwärmung der Raumluft, eine Lüftungseinheit mit mindestens einem Zuluftgebläse für die Zufuhr von Frischluft zu dem Innenraum und mit mindestens einem Abluftgebläse für die Abführung von Raumluft aus dem Innenraum sowie mit mindestens einem Wärmetauscher, wobei von dem Zuluftgebläse angesaugte Frischluft und von dem Abluftgebläse angesaugte Raumluft durch den mindestens einen Wärmetauscher geleitet werden kann, und wobei die Lüftungs-Heizvorrichtung weiterhin ein Gehäuse umfasst, von dem der Heizkörper und die Lüftungseinheit zumindest teilweise aufgenommen sind. Weiterhin betrifft die Erfindung eine Einbauschablone für eine derartige Lüftungs-Heizvorrichtung.

Eine Erfindung der vorgenannten Art ist beispielsweise aus der europäischen Patentanmeldung EP 0 942 237 A2 bekannt. Bei der darin beschriebenen Lüftungs-Heizvorrichtung ist der Heizkörper Teil eines Zentralheizungssystems, wobei der Heizkörper an Heizungsrohre angeschlossen ist, durch die erwärmtes Wasser oder dergleichen fließt. Die aus dem Stand der Technik bekannte Lüftungs-Heizvorrichtung umfasst weiterhin ein Gehäuse, in dem der Heizkörper und die einzelnen Bestandteile der Lüftungseinheit untergebracht sind. Das Gehäuse kann beispielsweise an der Wand eines Innenraumes befestigt werden. Auf der Rückseite des Gehäuses sind Zuluft- und Abluftöffnungen vorgesehen, die mit entsprechenden Kanälen lüftungstechnisch zusammenwirken, die aus dem Innenraum des Gebäudes zu der Außenseite des Gebäudes verlaufen. Somit kann das Zuluftgebläse Frischluft ansaugen, die durch den Wärmetauscher hindurch beispielsweise in den Heizkörper gelangen kann. Weiterhin kann das Abluftgebläse Raumluft ansaugen, die ebenfalls durch den Wärmetauscher geleitet wird und teilweise ihre Wärme an die Zuluft abgibt. Die Abluft kann dann von dem Abluftgebläse durch die Abluftöffnung aus dem Gebäude herausgeblasen werden.

Als nachteilig bei der aus dem Stand der Technik bekannten Lüftungs-Heizvorrichtung erweist sich zum einen, dass die einzelnen Teile der Lüftungseinheit derart in dem Gehäuse untergebracht sind, dass in mehreren unter Umständen aufwendigen Arbeitsschritten die Einzelteile entfernt beziehungsweise ausgebaut werden müssen, bevor der Benutzer auf die Abluft- und Zuluftöffnungen zugreifen kann, um diese beispielsweise zu säubern. Weiterhin ist die aus dem Stand der Technik bekannte Lüftungs-Heizvorrichtung so gestaltet, dass die Anschlüsse für den Heizkörper immer auf der rechten Seite der Lüftungs-Heizvorrichtung angeordnet sein müssen. Hier muss somit bei eventuell im linken Eckbereich eines Raumes angeordneten Heizungsanschlüssen beträchtlicher Aufwand betrieben werden, um die Anschlüsse in den Bereich der rechten Seite der Lüftungs-Heizvorrichtung zu verlegen. Weiterhin als nachteilig erweist sich, dass das Gehäuse der aus dem Stand der Technik bekannten Lüftungs-Heizvorrichtung nur relativ umständlich an der Wand des Innenraumes befestigt werden kann. Ein zusätzlicher Nachteil ist darin zu sehen, dass die Justierung der an dem Gehäuse angeordneten Zuluft- und Abluftöffnung fluchtend zu den entsprechenden in der Wand angeordneten Kanälen beziehungsweise die Justierung des Heizkörpers relativ zu den Heizungsanschlüssen gemäß dem Stand der Technik nur relativ zeitraubend durchgeführt werden kann.

Das der vorliegenden Erfindung zugrundeliegende Problem ist die Schaffung einer Lüftungs-Heizvorrichtung der eingangs genannten Art, die insbesondere hinsichtlich Wartung und Montage effektiver gestaltet ist.

Dies wird erfindungsgemäß durch eine Lüftungs-Heizvorrichtung mit den kennzeichnenden Merkmalen der Ansprüche 1, 13 und 20 gelöst. Anspruch 24 betrifft weiterhin eine Einbauschablone für eine erfindungsgemäße Lüftungs-Heizvorrichtung.

Gemäß Anspruch 1 ist vorgesehen, dass die Lüftungseinheit und das Gehäuse Verbindungsmittel aufweisen, die derart zusammenwirken, dass die Lüftungseinheit als separates Modul aus dem Gehäuse entnehmbar ist. Durch diese Maßnahme wird die Wartungsfreundlichkeit der erfindungsgemäßen Lüftungs-Heizvorrichtung erhöht, weil die Lüftungseinheit einfach als Ganzes entnehmbar ist, wenn beispielsweise auf die Zuluft- oder Abluftöffnungen zugegriffen werden soll.

Erfindungsgemäß kann vorgesehen sein, dass die Verbindungsmittel Auflageschienen und/oder Halteschienen umfassen, die ein Herausziehen oder Hereinschieben der Lüftungseinheit aus dem Gehäuse oder in das Gehäuse ermöglichen. Auf diese Weise wird das Entnehmen oder das Einbringen der Lüftungseinheit aus dem Gehäuse beziehungsweise in das Gehäuse mit einfachen Mitteln, insbesondere ohne Werkzeug ermöglicht.

Hierbei kann die Lüftungseinheit von einem im wesentlichen umlaufenden Halterahmen umgeben sein, der insbesondere aus Metall gefertigt sein kann. Dieser Halterahmen kann dann den Wärmetauscher, das Zuluftgebläse und das Abluftgebläse sowie beispielsweise zusätzliche Filtermittel und dergleichen umfassen.

Vorteilhafterweise ist hierbei in Gebrauchstellung der Lüftungseinheit an einer Seitenfläche des Halterahmens eine Auflageschiene angebracht, die mit einer an dem Gehäuse angeordneten Auflageschiene zur vertikalen Unterstützung der Lüftungseinheit zusammenwirkt. Weiterhin kann vorzugsweise an der in Gebrauchstellung oberen Seite des Halterahmens eine Halteschiene angebracht sein, die mit einer an dem Gehäuse angeordneten Halteschiene derart zusammenwirken kann, dass die Lüftungseinheit innerhalb des Gehäuses in Gebrauchstellung nicht seitlich bewegt werden kann. Insbesondere können dabei die vorgenannte Halteschiene und die vorgenannte Auflageschiene die beide einzigen Befestigungsmittel sein, von denen die Lüftungseinheit in diesem Fall im wesentlichen auf einer ihrer Seiten gehalten beziehungsweise abgestützt wird.

Gemäß einer bevorzugten Ausführungsform der vorliegenden Erfindung umfasst das Gehäuse eine Rückwand, zwei von dieser in Gebrauchstellung in den Innenraum des Gebäudes wegragende Seitenwände sowie eine zwischen diesen und parallel zu diesen angeordnete Zwischenwand, wobei zwischen einer der Seitenwände und der Zwischenwand ein Aufnahmeraum für den Heizkörper geschaffen wird und wobei zwischen der anderen der beiden Seitenwände und der Zwischenwand ein Aufnahmeraum für die Lüftungseinheit geschaffen wird. Insbesondere können die gehäuseseitige Auflageschiene und die gehäuseseitige Halteschiene an der Zwischenwand angebracht sein. Sowohl die Auflageschienen als auch die Halteschienen können sich dabei derart senkrecht zu der Rückwand erstrecken, dass bei an einer Wand des Innenraumes des Gebäudes angeordnetem Gehäuse die Lüftungseinheit in einer Richtung im wesentlichen senkrecht auf die Wand zu in das Gehäuse einschiebbar beziehungsweise aus dem Gehäuse herausnehmbar ist.

Vorteilhafterweise umfasst das Gehäuse weiterhin ein Türelement, das raumseitig die Lüftungseinheit abdeckt. Dabei kann vorgesehen sein, dass das Türelement um eine vertikale, im Bereich einer der Seitenwände angeordnete Achse schwenkbar ist und mittels geeigneten Befestigungsmitteln an der Zwischenwand derart festlegbar ist, dass die Lüftungseinheit in dem Gehäuse gehalten wird. Weiterhin können dabei die Befestigungsmittel eine Türschließleiste umfassen, durch deren vertikale Verschiebung das Türelement verriegelt beziehungsweise entriegelt werden kann. Zur Entnahme der Lüftungseinheit muss somit zuerst die Türschließleiste vertikal bewegt werden, um das Türelement zu entriegeln. Daran anschließend wird das Türelement um die vertikale Achse verschwenkt. Daran anschließend kann dann die Lüftungseinheit entnommen werden. Nach Einbringung der Lüftungseinheit kann das Türelement auf die gleiche Weise wieder zugeklappt und verriegelt werden, wobei dadurch dann die Lüftungseinheit fest in dem Gehäuse gehaltert wird. Der gesamte Vorgang ist insbesondere ohne Werkzeuge realisierbar.

Erfindungsgemäß kann weiterhin vorgesehen sein, dass mindestens eine der beiden Seitenwände einen raumseitigen Rand aufweist, der sich parallel zu der Rückwand erstreckt, wobei eine an dem Türelement angeordnete Leiste hinter diesen Rand greifen kann. Auf diese Weise kann gewährleistet werden, dass ohne feste Verbindung zwischen dem Türelement und der Seitenwand durch die Hintergreifung des Randes durch die Leiste eine schwenkbare Verbindung zwischen Seitenwand und Türelement hergestellt wird. Die Leiste kann jedoch im aufgeklappten Zustand des Türelements einfach hinter dem Rand weggezogen werden, so dass das Türelement problemlos ohne Werkzeug von der Seitenwand entfernt werden kann.

Gemäß dem kennzeichnenden Merkmal des Anspruchs 13 ist vorgesehen, dass auf einer Seite des Gehäuses Haltemittel für die Halterung von Heizungsrohren angeordnet sind oder angeordnet werden können. Insbesondere können die Haltemittel auf der in Gebrauchstellung der Wand zugekehrten Seite der Rückwand des Gehäuses angeordnet sein. Durch die erfindungsgemäße Möglichkeit, Heizungsrohre auf der Rückseite des Gehäuses zu haltern, können zusätzliche, beispielsweise vom Lieferumfang einer erfindungsgemäßen Lüftungs-Heizvorrichtung umfasste, Heizungsrohre von der linken Seite zu der rechten Seite des Gehäuses der Lüftungs-Heizvorrichtung geführt werden. Somit kann bei beispielsweise im linken Bereich des Raumes angeordneten Heizungsanschlüssen mit den zusätzlichen Heizungsrohren auf sehr einfache Art und Weise ein Anschluss des auf der rechten Seite in dem Gehäuse untergebrachten Heizkörpers realisiert werden. Erfindungsgemäß muss somit zu diesem Zweck nicht raumseitig dieser Anschluss verlegt werden. Vielmehr können hinter dem Gehäuse der erfindungsgemäßen Lüftungs-Heizvorrichtung zusätzliche Heizungsrohre längs der Wand geführt werden. Diese Heizungsrohre können dann mit entsprechenden Anschlüssen des Heizkörpers verbindbar sein.

Es besteht erfindungsgemäß die Möglichkeit, dass die Haltemittel als Halteklammern ausgeführt sind, in die die Heizungsrohre insbesondere einclipsbar sind. Derartige Halteklammern sind zum einen relativ einfach gestaltet und ermöglichen zum anderen die problemlose Installierung der Heizungsrohre vor Ort.

Vorteilhafterweise sind im Bereich der Seitenwände sich von der Rückwand in Gebrauchstellung in Richtung auf die Wand erstreckende Abdeckränder vorgesehen, in denen Aussparungen derart angeordnet sind, dass sich Heizungsrohre zwischen dem Gehäuse und der Wand des Raumes durch die Aussparungen im Bereich der Seitenwände hindurch erstrecken können. Diese Abdeckränder können die hinter dem Gehäuse verlaufenden zusätzlichen Heizungsrohre optisch ansprechend kaschieren.

Gemäß einer bevorzugten Ausführungsform der vorliegenden Erfindung umfasst die Rückwand des Gehäuses eine Zuluftöffnung und eine Abluftöffnung, die mit einer entsprechenden Zuluftöffnung und einer entsprechenden Abluftöffnung der Lüftungseinheit derart zusammenwirken können, dass das Zuluftgebläse durch die Zuluftöffnung in der Rückwand Frischluft ansaugen kann und das Abluftgebläse durch die Abluftöffnung in der Rückwand Raumluft ausblasen kann.

Vorteilhafterweise sind die Zuluftöffnung und die Abluftöffnung auf der in Gebrauchstellung der Wand des Raumes zugewandten Seite der Rückwand von Dichtkissen umgeben. Diese Dichtkissen können mit einfachen Mitteln eine Abdichtung der vorgenannten Zuluft- und Abluftöffnungen bewirken.

Gemäß dem kennzeichnenden Teil des Anspruchs 20 ist vorgesehen, dass die Lüftungs-Heizvorrichtung eine Wandanschlussleiste umfasst, die an der Wand eines Raumes anbringbar ist und das Gehäuse haltern kann. Vermittels dieser Wandanschlussleiste kann die Anbringung des Gehäuses an der Wand des Raumes vereinfacht werden.

Insbesondere kann hierbei die Wandanschlussleiste an ihrer in Gebrauchstellung oberen Seite einen von der Wand des Raumes abstehenden Halterand aufweisen, der mit an dem Gehäuse angeordneten Haltemitteln zur Halterung des Gehäuses an der Wandanschlussleiste zusammenwirkt. Zusätzlich können dabei die gehäuseseitigen Haltemittel einen Halterand umfassen, der sich zumindest abschnittsweise längs des oberen Randes der Rückwand erstreckt und von dieser in Gebrauchstellung in Richtung auf die Wand und vorzugsweise endseitig ein Stück weit nach unten ragt. Zur Anbringung des Gehäuses an der Wand des Raumes muss somit lediglich die Wandanschlussleiste an die Wand geschraubt werden. Anschließend kann das Gehäuse mit seinem Halterand von oben in den Halterand der Wandanschlussleiste eingehängt werden. In diesem Zustand kann das Gehäuse auf der Wandanschlussleiste noch ein Stück weit nach links und rechts verschoben werden, bis die Zuluftund Abluftöffnungen mit den entsprechenden in der Wand angeordneten Kanälen fluchten. In der letztendlichen Stellung kann dann das Gehäuse an der Wandanschlussleiste beispielsweise durch Schraubverbindungen endgültig festgelegt werden.

Insbesondere kann hierbei vorgesehen sein, dass in der Wandanschlussleiste ebenfalls eine Zuluftöffnung und eine Abluftöffnung vorgesehen sind, die mit den Zuluftöffnungen beziehungsweise den Abluftöffnungen lüftungstechnisch zusammenwirken. Bei der vorgenannten Justierung des Gehäuses müssen also diese Zuluft- und Abluftöffnungen miteinander zur Deckung gebracht werden. Weiterhin können die in der Wandanschlussleiste vorgesehene Zuluftöffnung und die Abluftöffnung als Bohrschablonen für die in die Wand des Gebäudes einzubringenden Zuluft- und Abluftkanäle dienen.

Die in Anspruch 24 beanspruchte Einbauschablone ist dadurch gekennzeichnet, dass die Einbauschablone einen vertikalen Schenkel und einen horizontalen Schenkel aufweist, wobei der vertikale Schenkel mit der Wandanschlussleiste verbindbar ist und der horizontale Schenkel Justiermittel umfasst, die eine genaue Positionierung der Einbauschablone zu in dem Raum vorhandenen Heizungsanschlüssen ermöglichen. Erfindungsgemäß muss somit die Einbauschablone mit Hilfe der Justiermittel derart im Bereich der Wand des Innenraumes angebracht werden, dass beispielsweise von oben die Wandanschlussleiste mit ihrem Halterand auf die Einbauschablone aufgebracht werden kann. Weiterhin muss dann die Wandanschlussleiste horizontal ausgerichtet werden und in dieser Position an der Wand befestigt werden. Daran anschließend können beispielsweise der Zuluft- und der Abluftkanal der Wand gebohrt werden. Daran anschließend kann das Gehäuse an der Wandanschlussleiste angebracht werden. Die Einbauschablone kann von dem Lieferumfang einer erfindungsgemäßen Lüftungs-Heizvorrichtung umfasst sein und bietet dem Benutzer eine einfache Möglichkeit, die Lüftungs-Heizvorrichtung schnell und einfach zu im Raum vorhandenen Heizungsanschlüssen zu positionieren.

Weiterhin kann vorgesehen sein, dass auf der Unterseite des horizontalen Schenkels ein sich von diesem in Einbaulage nach unten erstreckender im wesentlichen vertikaler Lappen angebracht ist, der mindestens eine halbkreisförmige Ausnehmung für die Auflage auf Heizungsrohren zur Justierung der Einbauschablone umfasst. Vermittels dieser halbkreisförmigen Ausnehmungen kann die Einbauschablone auch zu Heizungsrohren positioniert werden, die nicht von unten aus dem Boden des Raumes nach oben heraustreten, sondern aus der Wand des Raumes heraustreten.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine schematische Seitenansicht einer erfindungsgemäßen Lüftungs-Heizvorrichtung ohne Abdeckung;
- Fig. 1b: eine Draufsicht auf die Lüftungs-Heizvorrichtung gemäß Fig. 1a;
- Fig. 2a: eine Fig. 1a entsprechende Seitenansicht des Gehäuses der erfindungsgemäßen Lüftungs-Heizvorrichtung ohne Lüftungseinheit und Heizkörper;
- Fig. 2b: eine Schnittansicht gemäß den Pfeilen IIb-IIb in Fig. 2a;
- Fig. 2c: eine Schnittansicht gemäß den Pfeilen llc-llc in Fig. 2a;
- Fig. 2d: eine Schnittansicht gemäß den Pfeilen IId-IId in Fig. 2a;
- Fig. 2e: eine Rückansicht gemäß dem Pfeil IIe in Fig. 2d;
- Fig. 3a: eine Vorderansicht einer Lüftungseinheit einer erfindungsgemäßen Lüftungs-Heizvorrichtung;
- Fig. 3b: eine Rückansicht der Lüftungseinheit gemäß Fig. 3a;
- Fig. 4a: eine Vorderansicht eines Türelements für die Abdeckung der Lüftungseinheit in dem Gehäuse einer erfindungsgemäßen Lüftungs-Heizvorrichtung;
- Fig. 4b: eine Schnittansicht gemäß den Pfeilen IVb-IVb in Fig. 4a;
- Fig. 5a: eine Vorderansicht einer Wandanschlussleiste einer erfindungsgemäßen Lüftungs-Heizvorrichtung mit einer Einbauschablone;
- Fig. 5b: eine Schnittansicht gemäß den Pfeilen Vb-Vb in Fig. 5a;
- Fig. 5c: eine Ansicht gemäß dem Pfeil Vc in Fig. 5a.

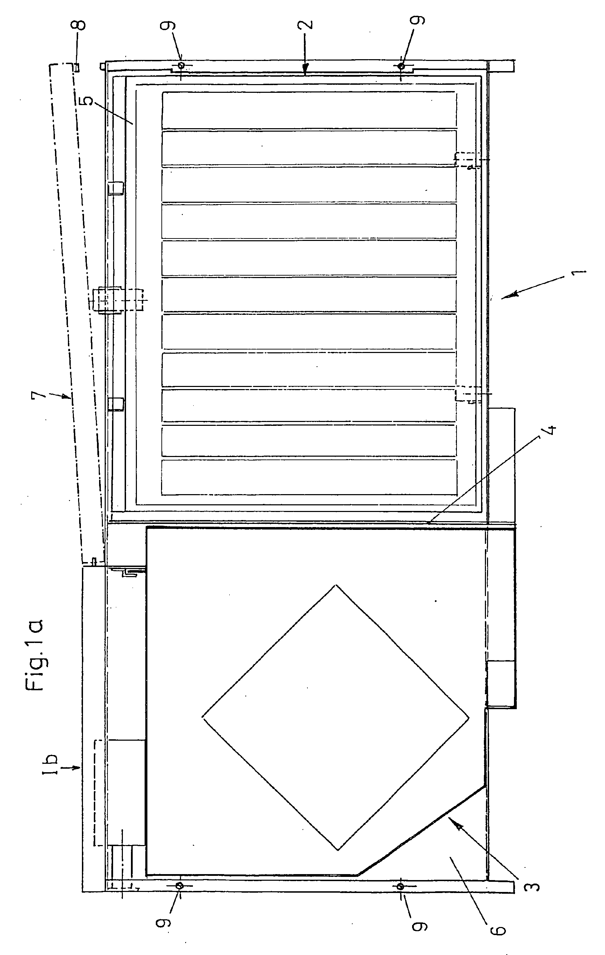

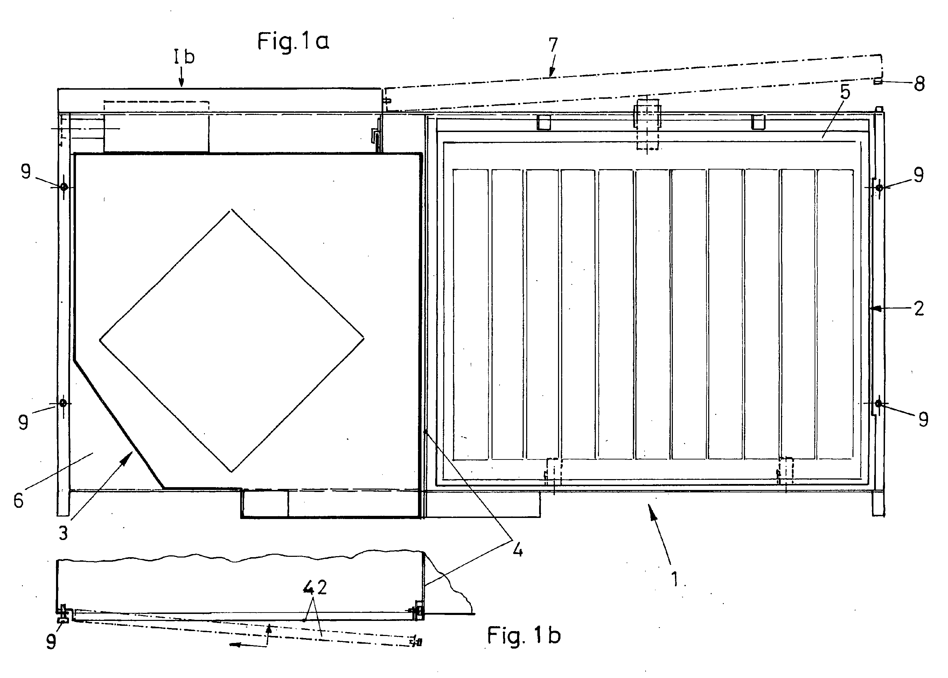

Wie aus Fig. 1 ersichtlich ist, umfasst eine erfindungsgemäße Lüftungs-Heizvorrichtung ein Gehäuse 1, in dem ein Heizkörper 2 und eine Lüftungseinheit 3 untergebracht sind. Aus Fig. 1 ist weiterhin ersichtlich, dass das Gehäuse 1 eine Zwischenwand 4 aufweist, die das Gehäuse 1 in zwei voneinander getrennte Aufnahmeräume 5, 6 für den Heizkörper 2 beziehungsweise die Lüftungseinheit 3 unterteilt. Weiterhin ist aus Fig. 1 ersichtlich, dass oberhalb des Heizkörpers 2 ein abnehmbarer Deckel 7 angeordnet ist, der vermittels Rastelementen 8 mit dem Gehäuse 1 verbindbar ist.

Das Gehäuse 1 kann auf seiner Vorderseite mit einer nicht dargestellten Abdeckung verschlossen werden. Dazu sind auf der Vorderseite des Gehäuses 1 Schrauben 9 angeordnet, die in entsprechende Schlüssellöcher oder dergleichen der Abdeckung eingreifen können.

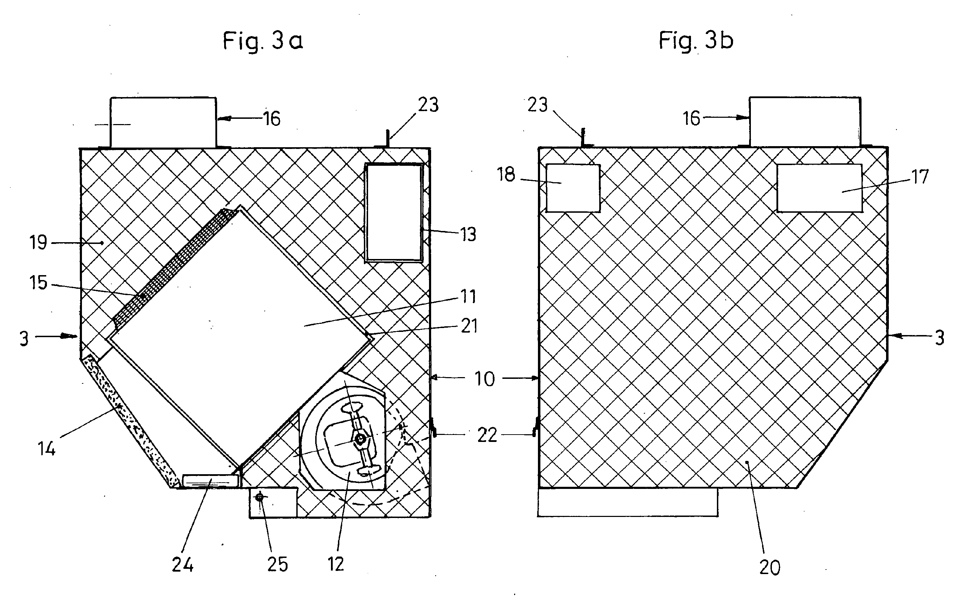

Aus Fig. 3a und Fig. 3b ist die Lüftungseinheit 3 detailliert ersichtlich. Die Lüftungseinheit 3 ist erfindungsgemäß als Ganzes, beziehungsweise als separates Modul relativ einfach aus dem Gehäuse 1 entnehmbar. Dazu ist die Lüftungseinheit von einem im wesentlichen umlaufenden Halterahmen 10 umgeben, der beispielsweise aus Blech gefertigt und entsprechend zusammengeschraubt sein kann. In Fig. 3a sind weiterhin ein Wärmetauscher 11, ein Zuluftgebläse 12, ein Abluftgebläse 13 sowie entsprechende Filtermittel 14, 15 für die Abluft beziehungsweise die Zuluft ersichtlich. Auf der Oberseite des Halterahmens ist weiterhin eine Steuereinheit 16 angeordnet, an der zusätzliche nicht abgebildete Stellknöpfe angebracht werden können, um zwischen einzelnen Funktionen der erfindungsgemäßen Lüftungs-Heizvorrichtung zu wählen.

Die Zuluft wird durch die auf der Rückseite der Lüftungseinheit 3 angeordnete Zuluftöffnung 17 durch das Filtermittel 15 von dem Zuluftgebläse 12 durch den Wärmetauscher 11 hindurchgesaugt. Diese angesaugte Luft kann dann beispielsweise durch den Heizkörper 2 hindurchgeführt werden.

Durch das Filtermittel 14 kann durch den Wärmetauscher 11 hindurch von dem Abluftgebläse 13 Umgebungsluft angesaugt werden, die durch die ebenfalls in Fig. 3b ersichtliche Abluftöffnung 18 aus der Lüftungseinheit 3 herausgeführt werden kann. Die Zuluftöffnung 17 und die Abluftöffnung 18 können wie im folgenden noch näher erläutert wird, mit entsprechenden Kanälen verbunden sein, die durch die Wandung des Gebäudes nach außen geführt sind, in dem die Lüftungs-Heizvorrichtung installiert wird.

In den Halterahmen 10 der Lüftungseinheit 3 können vordere und hintere Dichteinsätze 19, 20 eingebracht sein, die beispielsweise aus Styropor oder aus einem ähnlichen Dämmmaterial gefertigt sein können. In diesen Dichteinsätzen 19, 20 können entsprechende Aussparungen 21 beispielsweise für den Wärmetauscher 11 vorgesehen sein. Insbesondere kann der Wärmetauscher 11 lose in die ihn umgebende Aussparung 21 eingebracht sein, so dass er ohne die Zuhilfenahme von Werkzeugen aus der Lüftungseinheit 3 entnommen werden kann.

Zur Einbringung beziehungsweise Halterung der Lüftungseinheit 3 in das beziehungsweise in dem Gehäuse 1 ist an der Seite des Halterahmens 10 eine Auflageschiene 22 angebracht, die mit einer im nachfolgenden noch zu beschreibenden Auflageschiene des Gehäuses zusammenwirken kann. Die Auflageschiene 22 erstreckt sich beispielsweise über die gesamte Tiefe der Lüftungseinheit 3 beziehungsweise des Halterahmens 10 und steht in ihrem unteren Bereich von dem Halterahmen 10 ab, so dass in diesem Zwischenraum die vorgenannte Auflageschiene des Gehäuses eingreifen kann.

Auf der Oberseite der Lüftungseinheit 3 beziehungsweise des Halterahmens 10 ist eine Halteschiene 23 aufgebracht, die sich ebenfalls insbesondere über die gesamte Tiefe des Halterahmens 10 erstrecken kann. Diese Halteschiene 23 weist einen im wesentlichen L-förmigen Querschnitt auf mit einem nach oben ragenden Schenkel, der in eine entsprechende noch näher zu beschreibende Aufnahme des Gehäuses eingreifen kann. Die Auflageschiene 22 und die Halteschiene 23 sind im wesentlich an der in Fig. 3a rechten Seite der Lüftungseinheit 3 angeordnet, wobei somit die Lüftungseinheit 3 so in das Gehäuse 1 einbringbar ist, dass sie im wesentlichen an der rechten Seite gehaltert wird, wobei die linke Seite von dem Gehäuse 1 nicht unterstützt wird.

Die Lüftungseinheit 3 kann weiterhin eine Kondenswasserschale 24 umfassen, die aus dem Wärmetauscher 11 austretendes Kondenswasser auffangen kann. Weiterhin kann im Bereich der Unterseite der Lüftungseinheit 3 ein Schalterkontakt 25 vorgesehen sein, der beispielsweise genau dann die Lüftungseinheit 3 außer Betrieb setzt, wenn ein im Betriebszustand vor der Lüftungseinheit 3 angebrachtes Türelement, das im nachfolgenden noch näher beschrieben wird, entfernt wird, so dass der Schalterkontakt sich in Fig. 3a aus der Zeichenebene herausbewegen kann.

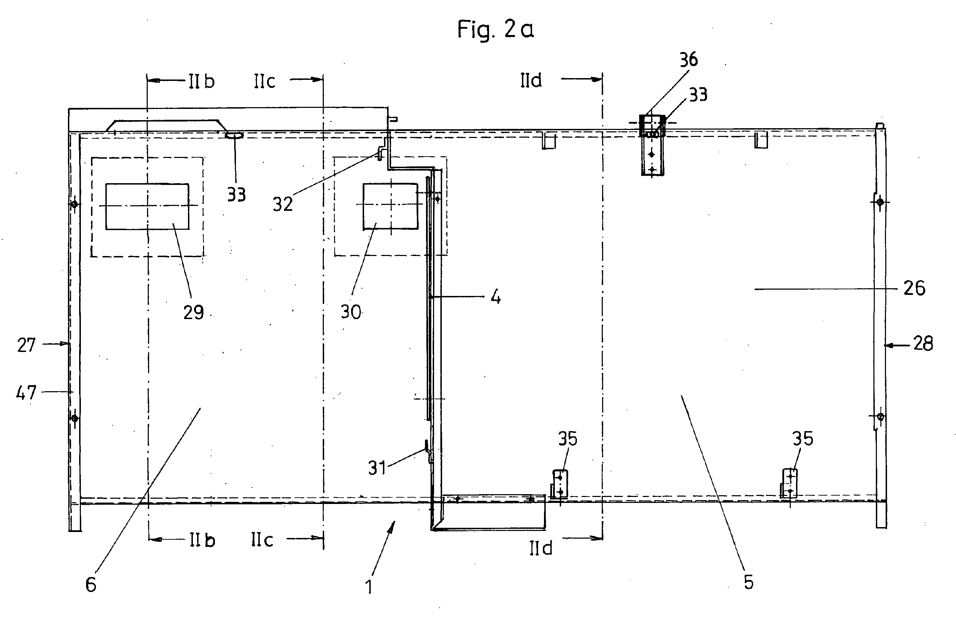

Aus Fig. 2a ist die Vorderansicht des Gehäuses 1 mit herausgenommenem Heizkörper 2 und herausgenommener Lüftungseinheit 3 ersichtlich. Das Gehäuse 1 umfasst eine Rückwand 26 sowie zwei sich von dieser nach vorne erstreckende jeweils an gegenüberliegenden Enden der Rückwand 26 angeordnete Seitenwände 27, 28. Weiterhin erstreckt sich von der Rückwand die vorgenannte Zwischenwand 4 parallel zu den Seitenwänden 27, 28 nach vorne. In dem zwischen der linken Seitenwand 27 und der Zwischenwand 4 gebildeten Aufnahmeraum 6 sind im oberen Bereich der Rückwand 26 eine Zuluftöffnung 29 und eine Abluftöffnung 30 angebracht, die entsprechend mit der Zuluftöffnung 17 und der Abluftöffnung 18 der Lüftungseinheit 3 fluchten und damit zusammenwirken.

Weiterhin sind aus Fig. 2a eine Auflageschiene 31 und eine Halteschiene 32 ersichtlich, die beide an der Zwischenwand 4 angebracht sind. Die Zwischenwand 4 hat in der Vorderansicht gemäß Fig. 2a einen Versatz nach links oberhalb der Abluftöffnung 30. Von diesem Versatz aus erstreckt sich die Zwischenwand 4 parallel zu dem unterhalb des Versatzes angeordneten Abschnitt nach oben. In diesem oberen Abschnitt der Zwischenwand 4 ist die Halteschiene 32 angeordnet, die im Prinzip eine nach unten offene Aufnahme für die Aufnahme der Halteschiene 23 der Lüftungseinheit 3 bildet. In dem unteren Abschnitt der Zwischenwand 4 ist auf der der linken Seitenwand 27 zugewandten Seite die Auflageschiene 31 angebracht. Diese Auflageschiene 31 bildet im wesentlichen eine nach oben offene Aufnahme für die Einbringung der Auflageschiene 22 der Lüftungseinheit 3.

Aus Fig. 2a sind ebenfalls im oberen Bereich der Rückwand 26 angeordnete Langlöcher 33 abgebildet, durch die hindurch die Rückwand 26 an eine noch zu beschreibende Wandanschlussleiste 34 anschraubbar ist. Aufgrund der Tatsache, dass sich die Langlöcher 33 horizontal erstrecken, kann bei der Montage des Gehäuses 1 vor Ort dieses gegenüber der Wandanschlussleiste 34 noch ein wenig hin und her verschoben werden.

In dem Aufnahmeraum 5 für den Heizkörper 2 sind im unteren Bereich Aufsatzhaken 35 für das Aufsetzen der hinteren Lamelle des Heizkörpers 2 angeordnet. Weiterhin ist im Bereich des oberen Endes der Rückwand 26 ein oberes Befestigungsteil 36 angebracht, das nach Einbringen des Heizkörpers 2 von oben über die hintere Lamelle des Heizkörpers aufgebracht werden kann. Dazu kann das Befestigungsteil 36 beispielsweise während des Einbringens des Heizkörpers nach oben gezogen oder zurückgeklappt werden.

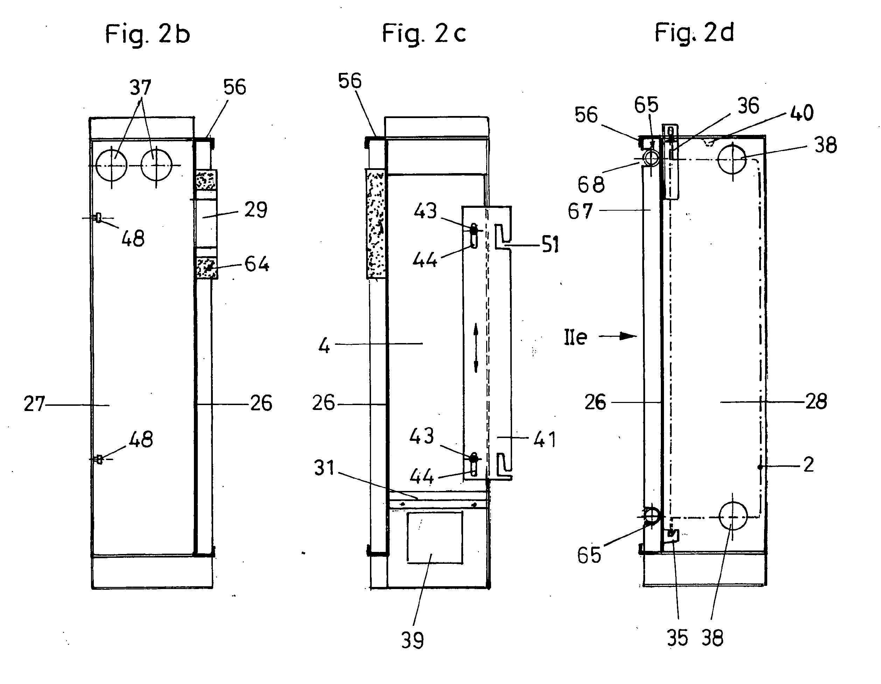

Aus Fig. 2b ist ersichtlich, dass die in Fig. 2a linke Seitenwand 27 in ihrem oberen Bereich zwei Öffnungen 37 für das Hindurchgreifen von Stellknöpfen der Steuereinheit 16 aufweist.

Die in Fig. 2a rechte Seitenwand 28 weist sowohl in ihrem oberen als auch in ihrem unteren Endbereich Öffnungen 38 für den Hindurchtritt von Heizrohranschlüssen auf (siehe dazu Fig. 2d). Alternativ oder zusätzlich dazu kann beispielsweise durch die obere Öffnung 38 auch ein Thermostatventil hindurchgreifen.

Aus Fig. 2c ist ersichtlich, dass die Zwischenwand 4 in ihrem unteren Bereich eine im wesentlichen quadratische Öffnung 39 aufweist, durch die von dem Zuluftgebläse 12 Luft in den Aufnahmeraum 5 eingeblasen werden kann, so dass diese Luft durch den Heizkörper 2 nach oben steigt.

Aus Fig. 2d ist weiterhin eine Rastaufnahme 40 ersichtlich, die zur Aufnahme des aus Fig. 1a ersichtlichen Rastelements 8 des Deckels 7 dient.

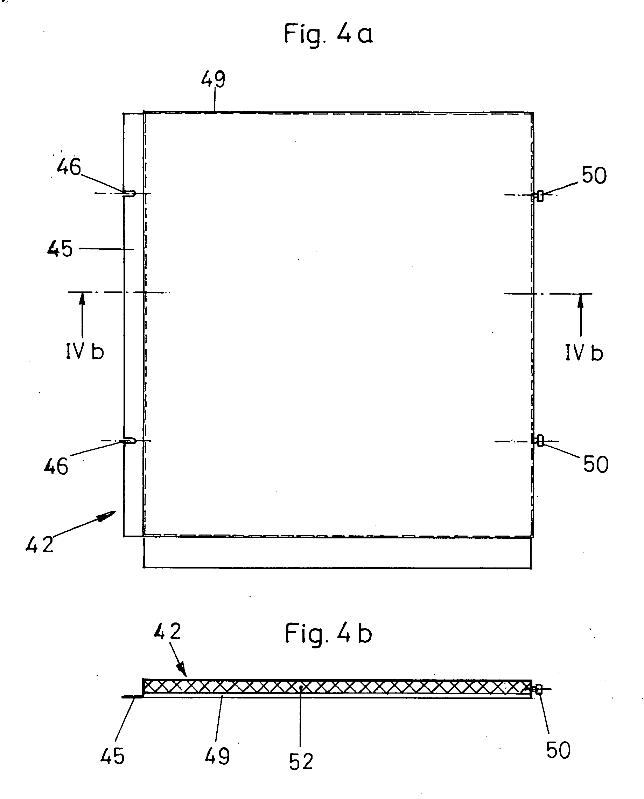

Fig. 2c zeigt weiterhin eine Türschließleiste 41 für die Verriegelung eines Türelementes 42, das, wie aus Fig. 1b ersichtlich ist, vor die Lüftungseinheit 3 geklappt werden kann. Das Türelement 42 wird im folgenden im Zusammenhang mit Fig. 4a und Fig. 4b noch näher erläutert. Die Türschließleiste 41 erstreckt sich von der Zwischenwand 4 nach vorne von der Rückwand 26 weg. Die Türschließleiste 41 erstreckt sich vertikal über ein großes Stück der Zwischenwand 4. Die Türschließleiste 41 ist an der Zwischenwand 4 vermittels um Schrauben 43 herumgreifende vertikal ausgerichtete Langlöcher 44 befestigt. Aufgrund dieser Anbringung vermittels Langlöchern 44 kann die Türschließleiste 41 ein Stück weit nach oben beziehungsweise nach unten an der Zwischenwand 4 bewegt werden.

Aus Fig. 4a und Fig. 4b ist das Türelemente 42 ersichtlich. Dieses ist im wesentlichen ein Blech mit einem rechteckigen, insbesondere quadratischen Umriß. Fig. 4a zeigt die zur Fig. 2a korrespondierende Einbaulage. Das Türelement 42 weist auf seiner linken Seite in Fig. 4a eine in Einbaulage hintere, d.h. der Rückwand 26 näher liegende und parallel zu dieser ausgerichtete Leiste 45 auf, die im oberen und im unteren Bereich zwei nach links offene Ausnehmungen 46 umfasst. Die mit der Leiste 45 zusammenwirkende linke Seitenwand 27 des Gehäuses 1 weist an ihrem vorderen, d.h. von der Rückwand 26 abgewandten Ende, einen sich in Fig. 2a nach rechts, d.h. von der Seitenwand 27 im wesentlichen parallel zu der Rückwand 26 wegerstreckenden Rand 47 auf, von dem aus sich zwei als Schrauben ausgebildete Befestigungsmittel 48 nach innen, d.h. in Richtung auf die Rückwand 26, erstrecken. Zur Anbringung des Türelements 42 kann die Leiste 45 hinter den vorderen Rand 47 der Seitenwand 27 geschoben werden, derart, dass die Ausnehmungen 46 in dem Bereich der Schrauben angeordnet sind und diese umgeben.

Das Türelement 42 weist weiterhin einen oberen, sich in Fig. 4a in die Zeichenebene hineinerstreckenden und somit in Einbaustellung sich in Richtung auf die Rückwand 26 erstreckenden Rand 49 auf. Wenn die Leiste 45 hinter den vorderen Rand 47 in der vorgenannten Art geschoben wird und das Türelement 42 um eine Achse, die etwa in dem Bereich der Leiste 45 angeordnet ist und sich vertikal erstreckt, in Richtung auf die Lüftungseinheit 3 geschwenkt wird, greift der obere Rand 49 des Türelementes 42 relativ passgenau über den vorderen Teil des oberen Randes des Halterahmens 10 der Lüftungseinheit 3.

An dem von der Leiste 45 abgewandten gegenüberliegenden Rand des Türelementes 42 sind jeweils im oberen und im unteren Bereich von dem Rand in Fig. 4a nach rechts wegragende Befestigungsmittel 50 in Form von Schrauben angebracht. Diese Befestigungsmittel 50 können mit L-förmigen Aussparungen 51 in der Türschließleiste 41 (siehe dazu Fig. 2c) zusammenwirken. Wenn das Türelement 42 bis an die Türschließleiste 41 herangeklappt ist, kann die Türschließleiste 41 vermittels der Langlochlagerung nach oben gezogen werden, so dass die als Schrauben ausgeführten Befestigungsmittel 50 in die unten nach außen beziehungsweise von der Rückwand 26 aus gesehen nach vorne offenen L-förmigen Aussparungen 51 eingeführt werden können. Durch anschließendes Herunterbewegen der Türschließleiste 41 wird das Türelement 42 derart verriegelt, dass es nicht mehr nach vorne aufklappen kann.

Das Türelement 42 kann auf seiner Innenseite, d.h. auf seiner in Einbaustellung der Lüftungseinheit 3 zugewandten Seite, mit einem Material 52 beschichtet sein, dass beispielsweise als Dicht- oder Dämmmaterial dienen kann. Es könnte sich bei diesem Material beispielsweise um Schaumstoff oder um Styropor oder dergleichen handeln.

Durch das Zuklappen und Verriegeln des Türelementes 42 an der Zwischenwand 4 wird die Lüftungseinheit 3 in der Aussparung 6 sicher festgelegt.

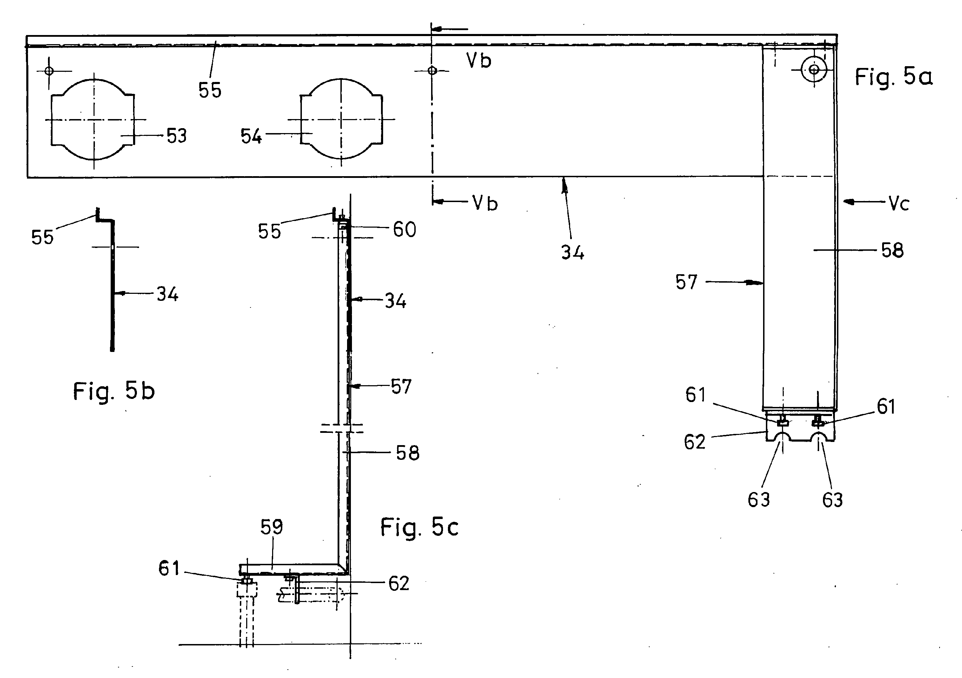

Aus Fig. 5a ist die Wandanschlussleiste 34 ersichtlich, die vor der Installation des Gehäuses 1 beziehungsweise des Heizkörpers 2 an der Innenwand des Gebäudes angebracht wird. Die Wandanschlussleiste 34 weist ebenfalls eine Zuluftöffnung 53 und eine Abluftöffnung 54 auf. Die Zuluftöffnung 53 und die Abluftöffnung 54 weisen dabei einen derartigen Querschnitt auf, dass sich von den Öffnungen in das Mauerwerk des Gebäudes hinein sowohl Kanäle mit kreisförmigem Querschnitt als auch Kanäle mit rechteckigem Querschnitt erstrecken können. Nach Anbringung der Wandanschlussleiste 34 kann diese aufgrund der Zuluftöffnung 53 und der Abluftöffnung 54 auch als Bohrschablone für in das Mauerwerk des Gebäudes zu bohrende Kanäle dienen.

Die Wandanschlussleiste 34 weist weiterhin an ihrer Oberseite einen sich von der Wandanschlussleiste 34 beziehungsweise von der Wand des Gebäudes nach vorne wegerstreckenden und sich dann parallel zu dem unteren Abschnitt der Wandanschlussleiste 34 beziehungsweise zu der Wand des Gebäudes nach oben beabstandet zur Wand erstreckenden Halterand 55 auf. Zwischen dem Halterand 55 und der Wand des Gebäudes entsteht somit ein sich über die gesamte Breite der Wandanschlussleiste 34 erstreckender Aufnahmeraum für einen mit dem Halterand 55 korrespondierenden oberen umgebogenen Halterand 56 der Rückwand. Dieser obere umgebogene Halterand 56 der Rückwand ist beispielsweise aus Fig. 2b, Fig. 2c und Fig. 2d deutlich ersichtlich. Der Halterand 56 weist dabei einen L-förmigen Querschnitt auf, mit einem sich von der Rückwand 26 nach hinten, d.h. in Richtung auf die Wand erstreckenden Schenkel und einem sich an diesen Schenkel anschließenden und vertikal nach unten erstreckenden Schenkel auf. Dieser sich vertikal nach unten erstreckende Schenkel des Halterandes 56 kann in den Zwischenraum zwischen dem Halterand 55 der Wandanschlussleiste 34 und der Gebäudewand eingreifen, so dass die Rückwand 26 und damit das Gehäuse 1 sicher durch die Wandanschlussleiste 34 an der Wand des Gebäudes in der gewünschten Position gehaltert werden kann.

Aus Fig. 5a ist weiterhin eine Einbauschablone 57 ersichtlich, die zur Justierung der Wandanschlussleiste 34 im Hinblick auf vorinstallierte Rohre eines Zentralheizungssystems dient. Die Einbauschablone 57 ist zu diesem Zweck im wesentlichen L-förmig ausgebildet, mit einem sich vertikal erstreckenden Schenkel 58 und einem sich an dessen unterem Ende anschließenden horizontalen Schenkel 59, der sich in Einbaulage von dem vertikalen Schenkel 58 nach vorne von der Wand des Gebäudes weg erstreckt. Der vertikale Schenkel 58 kann mit seinem oberen Ende an dem Halterand 55 beispielsweise mit einer Schraube 60 befestigt werden. An der Unterseite des horizontalen Schenkels 59 sind in dessen vorderem Bereich zwei sich nach unten erstreckende Justiermittel 61 angeordnet, die im abgebildeten Ausführungsbeispiel einfach als Schrauben ausgeführt sind. Diese Justiermittel 61 befinden sich exakt an der Position, an der für den korrekten Einbau des Heizkörpers 2 die Heizrohre des Zentralheizungssystems mit nach oben geöffneten Anschlussstücken enden müssen. Wenn somit diese Justiermittel 61 von oben auf diese Anschlussstücke der Heizungsrohre aufgelegt werden, ergibt sich durch die Verbindung zwischen Einbauschablone 57 und Wandanschlussleiste 34 die exakte für die Anbringung des Gehäuses 1 an der Wand optimale Position der Wandanschlussleiste 34. Diese kann somit in dieser Position mit geeigneten Befestigungsmitteln wie Schrauben oder dergleichen an der Wand befestigt werden.

Die Einbauschablone 57 weist weiterhin an der Unterseite des horizontalen Schenkels 59 einen sich im wesentlichen vertikal nach unten erstreckenden Lappen 62 auf, an dessen Unterseite zwei halbkreisförmige Ausnehmungen 63 angeordnet sind. Bei sich horizontal aus der Wand des Gebäudes nach vorne erstreckenden Heizungsrohren können die halbkreisförmigen Ausnehmungen 63 auf diese Heizungsrohre aufgebracht werden, wobei sich dann ebenfalls eine exakte Justage der Wandanschlussleiste 34 realisieren lässt.

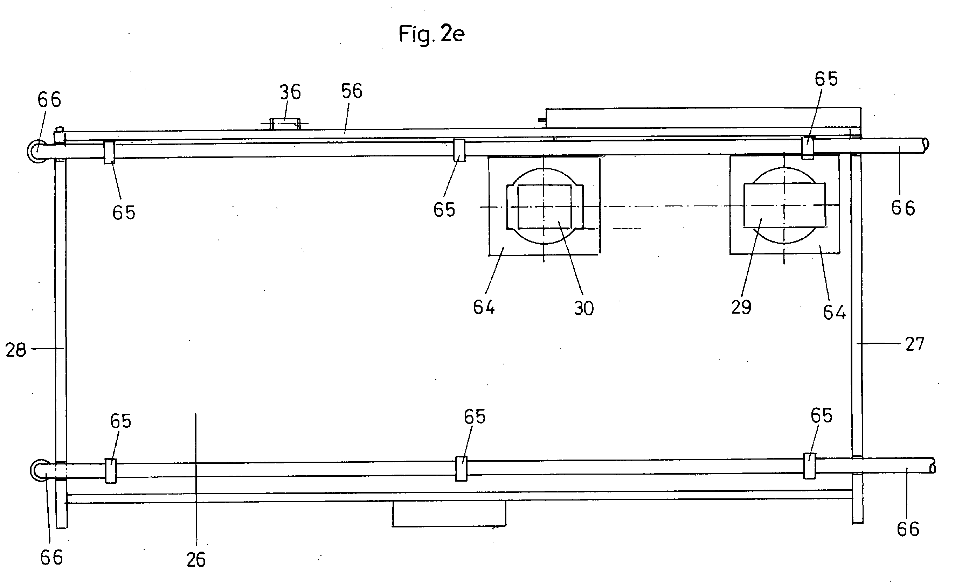

Aus Fig. 2e ist die Rückseite des Gehäuses 1, insbesondere der Rückwand 26 ersichtlich. Fig. 2e ist entnehmbar, dass sowohl die Zuluftöffnung 29 als auch die Abluftöffnung 30 der Rückwand 26 von Dichtkissen 64 umgeben sind, die eine Abdichtung des Übergangs zwischen den Zuluftöffnungen 29, 53 und den Abluftöffnungen 30, 54 in der Rückwand 26 bzw. in der Wandanschlussleiste 34 gewährleisten.

Weiterhin sind sowohl im oberen Bereich als auch im unteren Bereich der Rückwand jeweils in horizontaler Richtung miteinander fluchtende Halteklammern 65 an der Rückwand 26 angebracht, die in dem abgebildeten Ausführungsbeispiel jeweils ein Heizungsrohr 66 haltern. Bei den Halteklammern 65 handelt es sich um nach hinten offene Klammern, die für den Benutzer ein problemloses Einclipsen der Heizungsrohre von hinten an die Rückwand 26 ermöglichen.

Die Seitenwände 27, 28 weisen jeweils einen sich von der Rückwand 26 nach hinten erstreckenden zur Kaschierung dienenden Abdeckrand 67 auf, in dem beispielsweise halbkreisförmige Aussparungen 68 für den Hindurchtritt der Heizungsrohre 66 ausgenommen sind. Beispielsweise aus Fig. 2d sind der Abdeckrand 67, die Aussparungen 68 und die Halteklammern 65 im Querschnitt ersichtlich.

Die vorgenannten Halteklammern 65 und die Aussparungen 68 ermöglichen somit auch bei gemäß Fig. 2a links von dem Gehäuse endenden Heizungsrohren bzw. Heizungsanschlüssen einen relativ einfachen Anschluss des Heizkörpers an das Zentralheizungssystem. An gemäß Fig. 2a links von dem Gehäuse 1 angeordnete Heizungsanschlüsse können die aus Fig. 2e ersichtlichen Heizungsrohre 66 angeschlossen werden, die dann auf der Rückseite der Rückwand 26 zwischen dem Gehäuse 1 und der Wand des Gebäudes hindurchgeführt werden. Auf der in Fig. 2a rechten Seite bzw. in Fig. 2e linken Seite können diese Rohre dann nach vorne geführt werden und den Heizkörper kontaktieren. In dem abgebildeten Ausführungsbeispiel gemäß Fig. 2e handelt es sich um ein oben und um ein unten verlaufendes Heizungsrohr 66. Derartige oben und unten angebrachten Anschlüsse eignen sich für noch im Markt befindliche alte Heizkörper. Neuere Heizkörper weisen in der Regel Anschlüsse von unten auf.

Die zum Anschluss an gemäß Fig. 2a links von dem Gehäuse angeordnete Heizungsanschlüsse geeigneten Heizungsrohre 66 können mit zum Lieferumfang der erfindungsgemäßen Lüftungsheizvorrichtung gehören. Gleiches gilt für die Einbauschablone 57.

## Patentansprüche

1. Lüftungs-Heizvorrichtung für Innenräume eines Gebäudes, umfassend einen Heizkörper (2) für die Erwärmung der Raumluft, eine Lüftungseinheit mit mindestens einem Zuluftgebläse (12) für die Zufuhr von Frischluft zu dem Innenraum und mit mindestens einem Abluftgebläse (13) für die Abführung von Raumluft aus dem Innenraum sowie mit mindestens einem Wärmetauscher (11), wobei von dem Zuluftgebläse (12) angesaugte Frischluft und von dem Abluftgebläse (13) angesaugte Raumluft durch den mindestens einen Wärmetauscher (11) geleitet werden kann, und wobei die Lüftungs-Heizvorrichtung weiterhin ein Gehäuse umfasst, von dem der Heizkörper (2) und die Lüftungseinheit (3) zumindest teilweise aufgenommen sind, **dadurch gekennzeichnet, dass** die Lüftungseinheit (3) und das Gehäuse (1) Verbindungsmittel aufweisen, die derart zusammenwirken, dass die Lüftungseinheit (3) als separates Modul aus dem Gehäuse (1) entnehmbar ist.

2. Lüftungs-Heizvorrichtung nach Anspruch 1, **dadurch gekennzeichnet, dass** die Verbindungsmittel Auflageschienen (22, 31) und/oder Halteschienen (23, 32) umfassen, die ein Herausziehen oder ein Hereinschieben der Lüftungseinheit (3) aus dem Gehäuse (1) oder in das Gehäuse (1) ermöglichen.

3. Lüftungs-Heizvorrichtung nach einem der Ansprüche 1 oder 2, **dadurch gekennzeichnet, dass** die Lüftungseinheit (3) von einem im wesentlichen umlaufenden Halterahmen (10) umgeben ist, der insbesondere aus Metall gefertigt ist.

4. Lüftungs-Heizvorrichtung nach Anspruch 3, **dadurch gekennzeichnet, dass** in Gebrauchstellung der Lüftungseinheit (3) an einer Seitenfläche des Halterahmens (10) eine Auflageschiene (22) angebracht ist, die mit einer an dem Gehäuse (1) angeordneten Auflageschiene (31) zur vertikalen Unterstützung der Lüftungseinheit (3) zusammenwirkt.

5. Lüftungs-Heizvorrichtung nach einem der Ansprüche 3 oder 4, **dadurch gekennzeichnet, dass** an der in Gebrauchsstellung oberen Seite des Halterahmens (10) eine Halteschiene (23) angebracht ist, die mit einer an dem Gehäuse (1) angeordneten Halteschiene (32) derart zusammenwirken kann, dass die Lüftungseinheit (3) innerhalb des Gehäuses (1) in Gebrauchstellung nicht seitlich bewegt werden kann.

6. Lüftungs-Heizvorrichtung nach einem der Ansprüche 1 bis 5, **dadurch gekennzeichnet, dass** das Gehäuse (1) eine Rückwand (26), zwei von dieser in Gebrauchstellung in den Innenraum des Gebäudes wegragende Seitenwände (27, 28) sowie eine zwischen diesen und parallel zu diesen angeordnete Zwischenwand (4) umfasst, wobei zwischen einer der Seitenwände (27, 28) und der Zwischenwand (4) ein Aufnahmeraum (5) für den Heizkörper (2) geschaffen wird und wobei zwischen der anderen der beiden Seitenwände (27, 28) und der Zwischenwand (4) ein Aufnahmeraum (6) für die Lüftungseinheit geschaffen wird.

7. Lüftungs-Heizvorrichtung nach einem der Ansprüche 5 oder 6, **dadurch gekennzeichnet, dass** die gehäuseseitige Auflageschiene (31) und die gehäuseseitige Halteschiene (32) an der Zwischenwand (4) angebracht sind.

8. Lüftungs-Heizvorrichtung nach einem der Ansprüche 1 bis 7, **dadurch gekennzeichnet, dass** bei an einer Wand des Innenraums des Gebäudes angeordnetem Gehäuse (1) die Lüftungseinheit (3) in einer Richtung im wesentlichen senkrecht auf die Wand zu in das Gehäuse (1) einschiebbar ist.

9. Lüftungs-Heizvorrichtung nach einem der Ansprüche 1 bis 8, **dadurch gekennzeichnet, dass** das Gehäuse weiterhin ein Türelement (42) umfasst, das raumseitig die Lüftungseinheit (3) abdeckt.

10. Lüftungs-Heizvorrichtung nach Anspruch 9, **dadurch gekennzeichnet, dass** das Türelement (42) um eine vertikale, im Bereich einer der Seitenwände (27, 28) angeordnete Achse schwenkbar ist und mittels geeigneten Befestigungsmitteln an der Zwischenwand (4) derart festlegbar ist, dass die Lüftungseinheit (3) in dem Gehäuse (1) gehalten wird.

11. Lüftungs-Heizvorrichtung nach Anspruch 10, **dadurch gekennzeichnet, dass** die Befestigungsmittel eine Türschließleiste (41) umfassen, durch deren vertikale Verschiebung das Türelement (42) verriegelt beziehungsweise entriegelt werden kann.

12. Lüftungs-Heizvorrichtung nach einem der Ansprüche 10 oder 11, **dadurch gekennzeichnet, dass** mindestens eine der beiden Seitenwände (27, 28) einen raumseitigen Rand (47) aufweist, der sich parallel zu der Rückwand (26) erstreckt, wobei eine an dem Türelement (42) angeordnete Leiste (45) hinter diesen Rand (47) greifen kann.

13. Lüftungs-Heizvorrichtung nach einem der Ansprüche 1 bis 12 oder nach dem Oberbegriff des Anspruchs 1, **dadurch gekennzeichnet, dass** auf einer Seite des Gehäuses (1) Haltemittel für die Halterung von Heizungsrohren (66) angeordnet sind oder angeordnet werden können.

14. Lüftungs-Heizvorrichtung nach Anspruch 13, **dadurch gekennzeichnet, dass** die Haltemittel auf der in Gebrauchstellung der Wand zugekehrten Seite der Rückwand (26) des Gehäuses (1) angeordnet sind.

15. Lüftungs-Heizvorrichtung nach einem der Ansprüche 13 oder 14, **dadurch gekennzeichnet, dass** die Haltemittel als Halteklammern (65) ausgeführt sind, in die Heizungsrohre (66) insbesondere einclipsbar sind.

16. Lüftungs-Heizvorrichtung nach einem der Ansprüche 13 bis 15, **dadurch gekennzeichnet, dass** die Heizungsrohre (66) mit entsprechenden Anschlüssen des Heizkörpers (2) verbindbar sind.

17. Lüftungs-Heizvorrichtung nach einem der Ansprüche 13 bis 16, **dadurch gekennzeichnet, dass** im Bereich der Seitenwände (27, 28) sich von der Rückwand (26) in Gebrauchstellung in Richtung auf die Wand erstreckende Abdeckränder (67) vorgesehen sind, in denen Aussparungen (68) derart angeordnet sind, dass sich Heizungsrohre (66) zwischen dem Gehäuse (1) und der Wand des Raumes durch die Aussparungen (68) im Bereich beider Seitenwände (27, 28) hindurch erstrecken können.

18. Lüftungs-Heizvorrichtung nach einem der Ansprüche 1 bis 17, **dadurch gekennzeichnet, dass** die Rückwand (26) des Gehäuses (1) eine Zuluftöffnung (29) und eine Abluftöffnung (30) umfasst, die mit einer entsprechenden Zuluftöffnung (17) und einer entsprechenden Abluftöffnung (18) der Lüftungseinheit derart zusammenwirken können, dass das Zuluftgebläse (12) durch die Zuluftöffnung (29) in der Rückwand (26) Frischluft ansaugen kann und das Abluftgebläse (13) durch die Abluftöffnung (30) in der Rückwand (26) Raumluft ausblasen kann.

19. Lüftungs-Heizvorrichtung nach Anspruch 18, **dadurch gekennzeichnet, dass** die Zuluftöffnung (29) und die Abluftöffnung (30) auf der in Gebrauchstellung der Wand des Raumes zugewandten Seite der Rückwand (26) von Dichtkissen (64) umgeben sind.

20. Lüftungs-Heizvorrichtung nach einem der Ansprüche 1 bis 19 oder nach dem Oberbegriff des Anspruchs 1, **dadurch gekennzeichnet, dass** die Lüftungs-Heizvorrichtung eine Wandanschlussleiste (34) umfasst, die an der Wand eines Raumes anbringbar ist und das Gehäuse (1) haltern kann.

21. Lüftungs-Heizvorrichtung nach Anspruch 20, **dadurch gekennzeichnet, dass** die Wandanschlussleiste (34) an ihrer in Gebrauchsstellung oberen Seite einen von der Wand des Raumes abstehenden Halterand (55) aufweist, der mit an dem Gehäuse (1) angeordneten Haltemitteln zur Halterung des Gehäuses (1) an der Wandanschlussleiste (34) zusammenwirkt.

22. Lüftungs-Heizvorrichtung nach Anspruch 21, **dadurch gekennzeichnet, dass** die gehäuseseitigen Haltemittel einen Halterand (56) umfassen, der sich zumindest abschnittsweise längs des oberen Randes der Rückwand (26) erstreckt und von dieser in Gebrauchstellung in Richtung auf die Wand und vorzugsweise endseitig ein Stück weit nach unten ragt.

23. Lüftungs-Heizvorrichtung nach einem der Ansprüche 20 bis 22, **dadurch gekennzeichnet, dass** in der Wandanschlussleiste (34) eine Zuluftöffnung (53) und eine Abluftöffnung (54) vorgesehen sind, die mit den Zuluftöffnungen (17, 29) beziehungsweise den Abluftöffnungen (18, 30) lüftungstechnisch zusammenwirken.

24. Einbauschablone für eine Lüftungs-Heizvorrichtung nach einem der Ansprüche 20 bis 23, **dadurch gekennzeichnet, dass** die Einbauschablone (57) einen vertikalen Schenkel (58) und einen horizontalen Schenkel (59) aufweist, wobei der vertikale Schenkel mit der Wandanschlussleiste (34) verbindbar ist und der horizontale Schenkel (59) Justiermittel (61) umfasst, die eine genaue Positionierung der Einbauschablone (57) zu in dem Raum vorhandenen Heizungsanschlüssen ermöglichen.

25. Einbauschablone nach Anspruch 24, **dadurch gekennzeichnet, dass** auf der Unterseite des horizontalen Schenkels (59) ein sich von diesem in Einbaulage nach unten erstreckender im wesentlichen vertikaler Lappen (62) angebracht ist, der mindestens eine halbkreisförmige Ausnehmung (63) für die Auflage auf Heizungsrohren zur Justierung der Einbauschablone (57) umfasst.
